# EUROPEAN PATENT SPECIFICATION

(11) **EP 2 899 787 B1**
(45) Date of publication and mention of the grant of the patent: **26.07.2017**
(21) Application number: 14199970.6
(22) Date of filing: 23.12.2014
(51) Int. Cl.: H01M 8/04007, H01M 8/0612, H01M 8/2475, H01M 8/04014, H01M 8/124, H01M 8/2428

(54) **Fuel cell module**
Brennstoffzellenmodul
Module de pile à combustible

(30) Priority: 27.01.2014 JP 2014012610
(43) Date of publication of application: 29.07.2015
(73) Proprietor: AISIN SEIKI KABUSHIKI KAISHA, Kariya-shi, Aichi 448-8650 (JP)
(72) Inventor: ENDO, Satoshi, Kariya-shi, Aichi 448-8650 (JP)
(74) Representative: TBK

(56) References cited:
- EP-A1- 2 608 304
- EP-A1- 2 624 352
- US-A1- 2009 176 136

## Description

### TECHNICAL FIELD

This disclosure generally relates to a fuel cell module.

### BACKGROUND DISCUSSION

A known fuel cell apparatus is disclosed in JP 2013-131329 A and its family member EP 2 608 304 A1 (which will be hereinafter referred to as Patent reference 1). The known fuel cell apparatus disclosed in Patent reference 1 is provided with a power generation chamber including a stack which generates electric power from an anode gas and a cathode gas, and a housing accommodating the power generation chamber. The housing includes a first U-shaped plate member and a second U-shaped plate member each formed in a shape of a letter U when viewed at a cross section along a height direction of the housing. The housing also includes a first closing body closing a first upper surface opening portion of the first U-shaped plate member, and a second closing body closing a second upper surface opening portion of the second U-shaped plate member. The housing is formed in a manner that the second U-shaped plate member is arranged inside the first U-shaped plate member to be layered over the first U-shaped plate member with a clearance provided between an inner surface of the first U-shaped plate member and an outer surface of the second U-shaped plate member that is arranged inside the first U-shaped plate member. In addition, the power generation chamberis provided inside the second U-shaped plate member.

Further, the known fuel cell apparatus disclosed in Patent reference 1 is provided with a cathode gas flow passage for supplying the cathode gas to the stack and an exhaust gas flow passage for discharging a combustion gas generated by combusting an anode off-gas. A portion of the cathode gas flow passage is formed between the inner surface of the first U-shaped plate member and the outer surface of the second U-shaped plate member. A portion of the exhaust gas flow passage is formed between an inner surface of the second U-shaped plate member and outer surfaces of respective side thermal insulating layer and bottom thermal insulating layer. The cathode gas flowing through the cathode gas flow passage is preheated by the combustion gas flowing through the exhaust gas flow passage.

According to the known fuel cell apparatus disclosed in Patent reference 1, however, the housing is constituted by the U-shaped plate members and the closing bodies. Thus, the number of the members is relatively large, and each of the members includes a relatively large number of joint portions. The numbers of the members and the joints portions influence costs of the fuel cell apparatus and easiness in manufacturing the fuel cell apparatus.

A need thus exists for a fuel cell module which is provided at low costs and is manufactured easily.

### SUMMARY

According to an aspect of this disclosure, a fuel cell module has the features defined in claim 1.

According to the above-described configuration, an exterior portion of the fuel cell module is constituted by the first cylindrical member and the second cylindrical member, each of which is formed in the cylindrical shape. Accordingly, compared to a known configuration where an exterior portion or an outer casing is constituted by a U-shaped member and a cover member closing an opening portion of the U-shaped member, the number of the parts and components constituting the fuel cell module is reduced. In addition, in the known configuration, joining of the U-shaped member and the cover member to each other includes plural joint portions. Compared thereto, according to the above-described configuration of the present disclosure, the first cover member is joined to the at least one of the first opening portion of the first cylindrical member and the first opening portion of the second cylindrical member throughout the entire circumference thereof, and therefore the number of the joint portions between the first cover member, and the at least one of the first cylindrical member and the second cylindrical member is reduced. Further, the second cover member is joined to the at least one of the second opening portion of the first cylindrical member and the second opening portion of the second cylindrical member throughout the entire circumference thereof, and therefore the number of the joint portions between the second cover member, and the at least one of the first cylindrical member and the second cylindrical member is reduced. In addition, each of the first cover member and the second cover member is joined either to the opening portion of the first cylindrical member or to the opening portion of the second cylindrical member over the entire circumference, and accordingly the joining of the members can be performed continuously. As a result, the costs of the fuel cell module are reduced while easiness in manufacturing the fuel cell module is enhanced.

According to another aspect of this disclosure, the first flow passage corresponds to an exhaust combustion gas flow passage through which the exhaust combustion gas flows, and the second flow passage corresponds to a cathode gas flow passage through which the cathode gas flows.

According to the above-described configuration, at the fuel cell module, the power generation portion, the first flow passage and the cathode gas flow passage are arranged in the mentioned order from an inner side to an outer side. Accordingly, the exhaust combustion gas that is relatively high in temperature flows at the inner side of the fuel cell module relative to the flow of the cathode gas. Consequently, compared to a case where the exhaust combustion gas flow passage is arranged at the outer side relative to the cathode gas flow passage, a heat discharge from the exhaust combustion gas to the outside is restricted. As a result, the heat exchange between the exhaust combustion gas and the cathode gas is performed efficiently, and thus the exhaust combustion gas can preheat the cathode gas efficiently.

According to another aspect of this disclosure, the first flow passage corresponds to the first space portion formed between plural protruding portions provided at the first peripheral side wall and the outer wall surface.

According to the above-described configuration, the first space portion is formed between the outer wall surface and the inner surface of the first peripheral side wall.

According to another aspect of this disclosure, the first cylindrical member and the second cylindrical member are joined to each other in a state where end portions of the first cylindrical member and end portions of the second cylindrical member are clinched to each other, respectively, and a joining of the first cover member, and the at least one of the first opening portion of the first cylindrical member and the first opening portion of the second cylindrical member corresponds to clinch joining, and a joining of the second cover member, and the at least one of the second opening portion of the first cylindrical member and the second opening portion of the second cylindrical member corresponds to clinch joining.

According to the above-described configuration, the first cover member and the second cover member are joined either to the first and second opening portions of the first cylindrical member or to the first and second opening portions of the second cylindrical member along the entire circumference, and the members are joined to one another by being clinched. Accordingly, the members are joined to one another easily while airtightness of the joint portions is reliably ensured. As a result, the costs of the fuel cell module are more reduced while the easiness in manufacturing the fuel cell module is more enhanced

According to another aspect of this disclosure, the fuel cell module includes a communication pipe member formed in a cylindrical shape and connecting the first flow passage and an outside of the second cylindrical member to each other in such a manner that the first flow passage and the outside of the second cylindrical member are in fluid communication with each other, the first peripheral side wall of the first cylindrical member including a first through hole and the second peripheral side wall of the second cylindrical member including a second through hole, and a peripheral edge portion of the first through hole of the first cylindrical member and a peripheral edge portion of the second through hole of the second cylindrical member being overlapped with each other, the communication pipe member being joined to the first cylindrical member and to the second cylindrical member in a state where an opening end portion of the communication pipe member and the overlapped peripheral edge portions are clinched to each other.

According to the above-described configuration, when joining the communication pipe member to the first cylindrical member and to the second cylindrical member, the communication pipe member, and the first cylindrical member and the second cylindrical member are joined at a time. Accordingly, the members are joined to one another easily in a short period of time. As a result, the easiness in manufacturing the fuel cell module is further enhanced while the costs of the fuel cell module are further reduced.

According to another aspect of this disclosure, the power generation portion includes a heat insulating member insulating heat between the fuel cell and an outside of the fuel cell, and at least a part of the outer wall surface of the power generation portion is formed by an outer wall surface of the heat insulating member

According to the above-described configuration, the heat insulating member conserves the heat of the fuel cell, and the outer wall surface of the heat insulating member serves also as an inner wall surface of the first flow passage. As a result, the costs of the fuel cell module are further reduced because the number of the parts and components of the fuel cell module is reduced.

According to another aspect of this disclosure, a fuel cell system includes the fuel cell module described above.

According to the above-described configuration, the fuel cell system includes the effects that are similar to the effects obtained by the above-described fuel cell module.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic diagram of a fuel cell system according to an embodiment disclosed here;
Fig. 2 is a side view of a fuel cell module illustrated in Fig. 1;
Fig. 3 is a cross-sectional view of the fuel cell module, which is taken along line III-III in Fig. 2;
Fig. 4 is a perspective view of a first cylindrical member illustrated in Fig. 3;
Fig. 5 is a perspective view of a second cylindrical member, a first cover member and a second cover member which are illustrated in Fig. 2;
Fig. 6 is a cross sectional view illustrating an enlarged portion of the fuel cell module, which is taken along line VI-VI in Fig. 2;
Fig. 7 is a cross sectional view illustrating an enlarged portion of a joint portion where the first cylindrical member and the second cylindrical member, and a first communication pipe member, which are illustrated in Fig. 3, are joined to each other; and
Fig. 8 is a cross sectional view illustrating an enlarged portion of the fuel cell module, which is taken along line VIII-VIII in Fig. 2.

### DETAILED DESCRIPTION

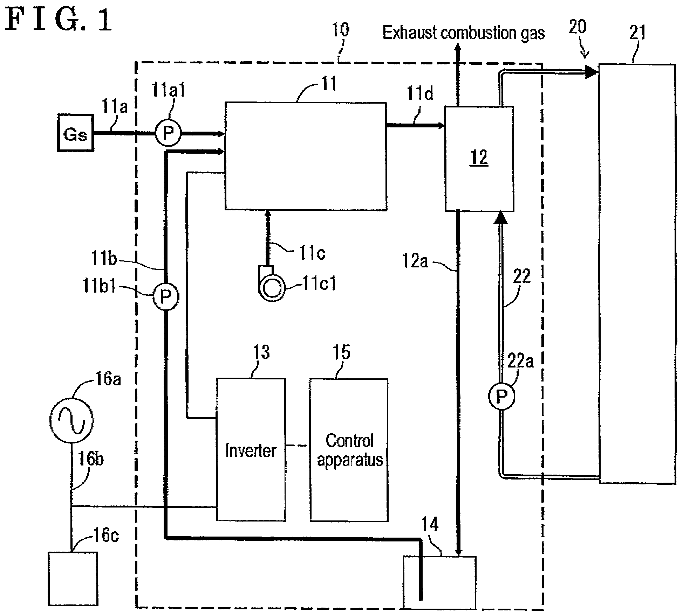

An embodiment of a fuel cell system disclosed here will be described. As illustrated in Fig. 1, the fuel cell system of the present embodiment includes a power generation unit 10 and a hot water storage tank 21. The power generation unit 10 includes a fuel cell module 11, a heat exchanger 12, an inverter device 13, a water tank 14 and a control apparatus 15.

The fuel cell module 11 is constituted to include at least a fuel cell apparatus 43 as will be described later. The fuel cell module 11 is supplied with a reforming material, reforming water and cathode air. Specifically, one end of a reforming material supply pipe 11 a, which is for supply of the reforming material used for the reforming, is connected to a supply source Gs and the other end of the reforming material supply pipe 11a is connected to the fuel cell module 11. A reforming material pump 11a1 is provided at the reforming material supply pipe 11 a. Further, one end of a water supply pipe 11 b, which is for supply of the reforming water, is connected to a water tank 14 and the other end of the water supply pipe 11 b is connected to the fuel cell module 11. A reforming water pump 11 b1 is provided at the water supply pipe 11 b. Further, one end of a cathode air supply pipe 11c, which is for supply of the cathode air, is connected to a cathode air blower 11 c1 and the other end of the cathode air supply pipe 11c is connected to the fuel cell module 11.

The heat exchanger 12 is supplied with an exhaust combustion gas discharged from the fuel cell module 11 and is supplied with stored hot water from the hot water storage tank 21, and accordingly, heat exchange is performed between the exhaust combustion gas and the stored hot water at the heat exchanger 12. Specifically, the hot water storage tank 21 stores therein the stored hot water, and a stored hot water circulation line 22 through which the stored hot water circulates (the stored hot water circulates in a direction of the arrows with the double lines in Fig. 1) is connected to the hot water storage tank 21. A stored hot water circulation pump 22a and the heat exchanger 12 are provided on the stored hot water circulation line 22 to be arranged from a lower end to an upper end in this order, respectively. An exhaust pipe 11 d from the fuel cell module 11 is connected, in a penetrating manner, to the heat exchanger 12. A condensed water supply pipe 12a, which is connected to the water tank 14, is connected to the heat exchanger 12.

The exhaust combustion gas from the fuel cell module 11 is introduced via the exhaust pipe 11 d into the heat exchanger 12, where the heat exchange between the exhaust combustion gas and the stored hot water is performed, and the exhaust combustion gas is condensed and cooled down at the heat exchanger 12. After the condensation, the exhaust combustion gas is discharged to an outside via the exhaust pipe 11d. In addition, the condensed water is supplied to the water tank 14 via the condensed water supply pipe 12a. The water tank 14 is configured to purify the condensed water by means of ion-exchange resin. The heat exchanger 12, the hot water storage tank 21 and the stored hot water circulation line 22, which are described above, constitute an exhaust heat recovery system 20. The exhaust heat recovery system 20 recovers exhaust heat of the fuel cell module 11 in the stored hot water and stores the exhaust heat therein.

Further, direct current voltage outputted from the fuel cell apparatus 43 is inputted to the inverter device 13 and is converted into a predetermined alternating current voltage at the inverter device 13. The converted alternating current voltage is outputted to a power supply line 16b. The power supply line 16b is electrically connected to a system power supply 16a which is an alternating-current power supply, and to an external electric power load 16c (for example, an electric appliance). In addition, the alternating current voltage from the system power supply 16a is inputted into the inverter device 13 via the power supply line 16b and is converted into a predetermined direct current voltage at the inverter device 13. The converted direct current voltage is outputted to auxiliary apparatuses (for example, the pumps and a blower) and/or to the control apparatus 15. The control apparatus 15 drives the auxiliary apparatuses and thus controls driving or operation of the fuel cell system.

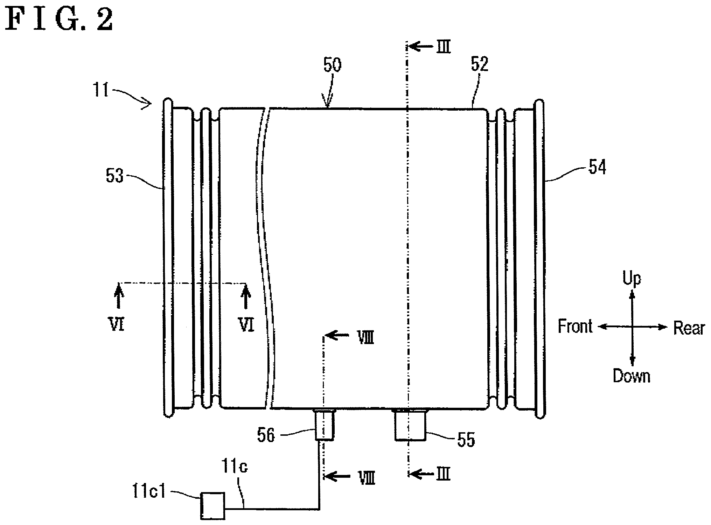

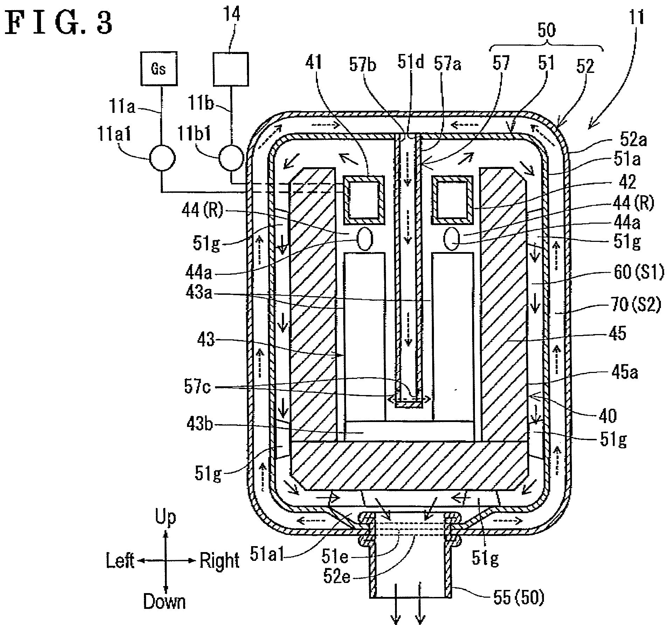

The fuel cell module 11 corresponds to a solid oxide fuel cell (SOFC) module. As illustrated in Figs. 2 and 3, the fuel cell module 11 includes a power generation portion 40, an exterior portion 50 accommodating the power generation portion 40, a first flow passage 60 and a second flow passage 70. In the embodiments disclosed here, for convenience of the explanation, an upper side and a lower side in Fig. 2 correspond to an upper side and a lower side of the fuel cell module 11, respectively. A right side and a left side in Fig. 2 correspond to a rear side and a front side of the fuel cell module 11, respectively. Further, a front side and a back side of the paper surface on which Fig. 2 is drawn correspond to a left side and a right side of the fuel cell module 11, respectively. In each of Figs. 2, 3 and 9, arrows are illustrated to indicate the aforementioned directions.

The power generation portion 40 includes an evaporating portion 41, a reforming portion 42, the fuel cell apparatus 43, a combusting space R corresponding to a combusting portion 44, and a heat insulating member 45. The evaporating portion 41 and the reforming portion 42 are arranged to be positioned at an upper side relative to the fuel cell apparatus 43. The combusting space R (the combusting portion 44) is arranged between the evaporating portion 41 and the reforming portion 42, and the fuel cell apparatus 43.

The other end of the reforming material supply pipe 11 a and the other end of the water supply pipe 11 b are connected to the evaporating portion 41. The evaporating portion 41 is heated by a combustion gas which will be described below. The evaporating portion 41 evaporates the reforming water supplied via the water supply pipe 11 b, and generates and derives water vapor (water vapor for reforming). In addition, the evaporating portion 41 preheats the reforming material which is supplied via the reforming material supply pipe 11 a. Then, the water vapor (the water vapor for reforming) generated through the evaporation of the reforming water and the preheated reforming material are mixed with each other by the evaporating portion 41, and then the mixture is provided to the reforming portion 42. For example, the reforming material includes gaseous fuel for reforming, such as natural gas and liquefied petroleum gas (LPG), and liquid fuel for reforming, such as kerosene, gasoline and methanol. In the present embodiment, the explanation is made on a case where the natural gas is used.

The reforming portion 42 generates a reformed gas (which serves as an anode gas, and thus which will be hereinafter referred to as the anode gas) from the reforming material and the water vapor (the water vapor for reforming). Specifically, the reforming portion 42 is heated by the combustion gas, which will be described below, and thus the heat needed for a steam reforming reaction is supplied to the reforming portion 42. Then, at the reforming portion 42, the anode gas is generated and derived from the mixed gas (the reforming material, the water vapor for reforming) that is supplied from the evaporating portion 41. An inside of the reforming portion 42 is filled with catalyst (for example, ruthenium (Ru) based catalyst or nickel (Ni) based catalyst, and the reaction of the mixed gas is catalyzed and the mixed gas is reformed, and consequently, a hydrogen gas and a carbon monoxide gas are generated (the so-called steam reforming reaction). At the same time, the carbon monoxide and the water vapor, which are generated by the steam reforming reaction, react to each other and are converted to hydrogen gas and carbon dioxide, that is, a so-called carbon monoxide shift reaction occurs. The generated gasses (the anode gas) are provided to the fuel cell apparatus 43. The anode gas includes hydrogen, carbon monoxide, carbon dioxide, water vapor, unused natural gas (methane gas), and the reforming water (the water vapor) that was not used in the reforming. The steam reforming reaction is an endoergic reaction and the carbon monoxide shift reaction is an exoergic reaction.

The fuel cell apparatus 43 includes a fuel cell 43a and a manifold 43b. The fuel cell 43a produces electric power from the anode gas and the cathode gas. The cathode gas corresponds to oxidant gas. In the present embodiment, the oxidant gas corresponds to air. The fuel cell 43a is constituted by plural cells stacked one another along a front/rear direction in Fig. 3. The cell is constituted by a fuel electrode, an air electrode (an oxidant electrode) and electrolyte arranged between the fuel electrode and the air electrode. The fuel cell of the present embodiment is a solid oxide fuel cell (SOFC) and zirconium oxide, which is a type of solid oxide, is used as the electrolyte. As fuel, for example, hydrogen, carbon monoxide and methane gas are supplied to the fuel electrode of the fuel cell 43a. An operation temperature of the fuel cell 43a is approximately 400 °C to 1000 °C. In addition, as the fuel, not only the hydrogen but also natural gas and/or coal gas may be used as a direct fuel. In this case, the reforming portion 42 may be omitted.

A fuel flow passage is provided at the fuel electrode-side of the cell. The anode gas, which serves as the fuel, flows through the fuel flow passage. An air flow passage is provided at the air electrode-side of the cell. The air (the cathode air), which serves as cathode gas, flows through the air flow passage.

The fuel cell 43a is arranged on the manifold 43b. The anode gas is supplied from the reforming portion 42 via a reformed gas supply pipe to the manifold 43b. A lower end (one end) of the fuel flow passage is connected to a fuel outlet port of the manifold 43b. The anode gas provided from the fuel outlet port is introduced from the lower end of the fuel flow passage, and then comes out from an upper end thereof. On the other hand, the cathode air is introduced from a lower end of the air flow passage, and then comes out from an upper end thereof.

At the fuel cell 43a, the power generation is performed with the anode gas supplied to the fuel electrode and the cathode gas supplied to the air electrode. That is, the reactions presented by a chemical formula 1 and a chemical formula 2, which are stated below, occurs at the fuel electrode. The reaction presented by a chemical formula 3, which is stated below, occurs at the air electrode. That is, oxide ion (O^{2 -}) generated at the air electrode passes through the electrolyte and reacts with hydrogen at the fuel electrode, and thereby generating electric energy. Accordingly, the anode gas and the cathode gas, which are not used for the power generation, come out from the fuel flow passage and the air flow passage.

(Formula 1) H₂ + O²⁻ → H₂O + 2e⁻

(Formula 2) CO + O²⁻→ CO₂ + 2e⁻

(Formula 3) 1/2O₂ + 2^{e-} → O²⁻

The anode gas coming out from the fuel flow passage and the air flow passage, which is the anode gas not used for the power generation (that is, an anode off-gas), is combusted in the combusting space R by the cathode gas which is not used for the power generation (that is, a cathode off-gas). The evaporating portion 41 and the reforming portion 42 are heated by the combustion gas (flame 44a). Further, the combustion gas heats an inside of the power generation portion 40 to the operation temperature. As described above, the combusting space R corresponds to the combusting portion 44 at which the anode off-gas from the fuel cell 43a and the cathode off-gas from the fuel cell 43a are combusted or burnt, and which heats the reforming portion 42 accordingly.

The combusting portion 44 (the combusting space R) is for burning a combustible gas and the oxidant gas. The combustible gas is a gas that is combustible and, in the present embodiment, the combustible gas corresponds to the fuel for reforming, the anode off-gas, carbon monoxide and the like. That is, the combusting portion 44 is for combusting the anode off-gas coming out from the fuel cell 43a. Then, the combusting portion 44 combusts the anode off-gas and generates the exhaust combustion gas. The exhaust combustion gas is discharged to an outside of a second cylindrical member 52 which will be described later, that is, discharged to the atmosphere.

The heat insulating member 45 thermally insulates the fuel cell 43a and an outside of the fuel cell 43a (that is, an outside of the power generation portion 40 or of the fuel cell module 11). For example, the heat insulating member 45 is made from a heat insulating material having high heat insulating properties, for example, ceramics. The heat insulating member 45 includes a cross-sectional shape of a letter U opening upwardly (refer to Fig. 3). The evaporating portion 41, the reforming portion 42 and the fuel cell apparatus 43 are provided inside the heat insulating member 45. A bottom surface of the fuel cell apparatus 43 is in contact with a lower surface of the inside of the heat insulating member 45. A part of an outer wall surface of the power generation portion 40 is formed by, that is, defined by an outer wall surface 45a of the heat insulating member 45.

The exterior portion 50 includes a first cylindrical member 51, the second cylindrical member 52, a first cover member 53, a second cover member 54, a first communication pipe member 55 (which serves as a communication pipe member) and a second communication pipe member 56. Each of the first cylindrical member 51, the second cylindrical member 52, the first cover member 53, the second cover member 54, the first communication pipe member 55 and the second communication pipe member 56 is made of metal, for example, carbon steel or steel alloy. Each of the first cylindrical member 51, the second cylindrical member 52, the first cover member 53, the second cover member 54, the first communication pipe member 55 and the second communication pipe member 56 is formed by means of, for example, press working and/or welding.

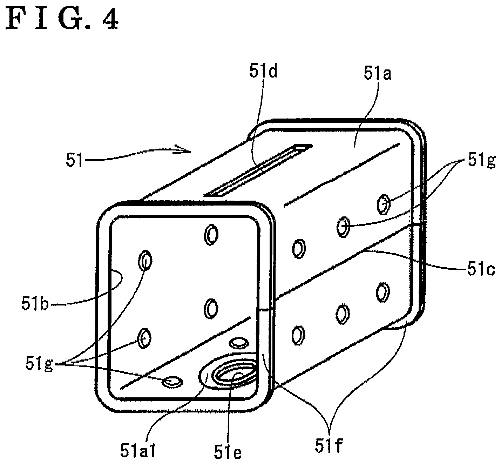

The first cylindrical member 51 is formed in a cylindrical shape and is arranged to surround the power generation portion 40. Specifically, as illustrated mainly in Fig. 4, the first cylindrical member 51 includes a first peripheral side wall 51 a formed to have a substantially quadrate-shaped cross section. Further, the first cylindrical member 51 includes first and second opening portions 51 b which are respectively provided at both ends of the first cylindrical member 51. An inner surface of the first peripheral side wall 51 a faces the outer wall surface of the power generation portion 40 while a first space portion S1 is provided between the inner surface of the first peripheral side wall 51 a and the outer wall surface of the power generation portion 40 (refer to Fig. 3). The first cylindrical member 51 is welded at a welded portion 51 c. The welded portion 51 c is provided over a right-side wall of the first peripheral side wall 51a in the front/rear direction. Further, the first cylindrical member 51 includes an elongated hole 51 d, a first through hole 51e (which serves as a first through hole), flange portions 51f and plural protruding portions 51 g.

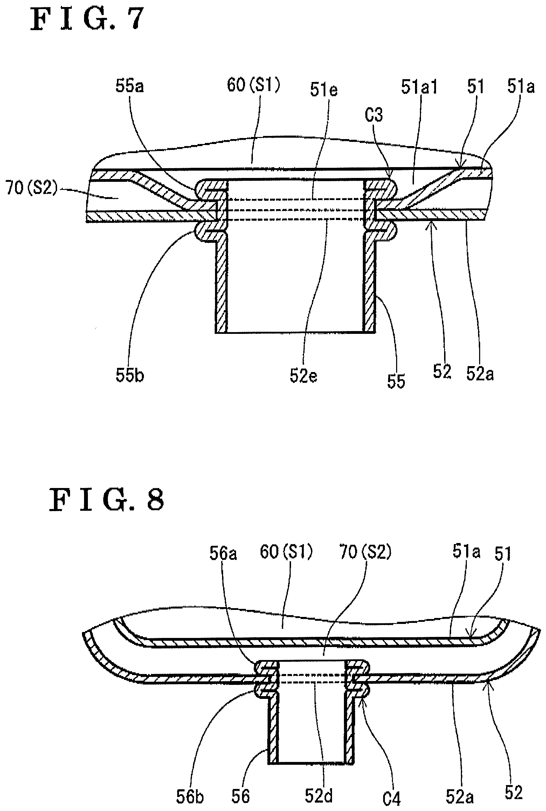

The elongated hole 51 d is formed to penetrate an upper wall of the first peripheral side wall 51 a and to be elongated in the front/rear direction. The first through hole 51e is formed to penetrate a lower wall of the first peripheral side wall 51 a. Specifically, the first through hole 51e penetrates a protruding end portion of a protruding portion 51 a1. As illustrated in Figs. 3 and 7, the protruding portion 51a1 is formed at the lower wall of the first peripheral side wall 51 a so as to protrude downwardly.

The flange portion 51f is provided at a peripheral edge of each of the first and second opening portions 51 b of the first cylindrical member 51 over an entire circumference of each of the first and second opening portions 51 b. In addition, the plural protruding portions 51 g, each protruding inwardly, are provided at the right-side wall, a left-side wall and the lower wall of the first peripheral side wall 51a while a predetermined distance is provided between the neighboring protruding portions 51 g. A protruding end surface of each of the protruding portions 51 g is in contact with the outer wall surface 45a of the heat insulating member 45. Accordingly, the first space portion S1 is provided between the outer wall surface 45a and the inner surface of the first peripheral side wall 51 a.

The exterior portion 50 includes a gas introduction member 57. The gas introduction member 57 is formed in a cylindrical shape and is arranged at an upper wall of the first cylindrical member 51 so as to hang down from the upper wall or so as to be extended downwardly from the upper wall. The gas introduction member 57 includes a cylindrical portion 57a, an inlet port 57b and an outlet port 57c. An upper end portion of the cylindrical portion 57a is air-tightly connected to the elongated hole 51 d. The cylindrical portion 57a is extended downwardly from the elongated hole 51 d to a lower portion of the fuel cell 43a. Accordingly, the inlet port 57b is in fluid communication with a space portion (a second space portion S2) formed between an outer surface of the first peripheral side wall 51 a of the first cylindrical member 51 and an inner surface of a second peripheral side wall 52a of the second cylindrical member 52. In addition, the outlet port 57c is formed at a lower end portion of the cylindrical portion 57a to open towards the lower portion of the fuel cell 43a.

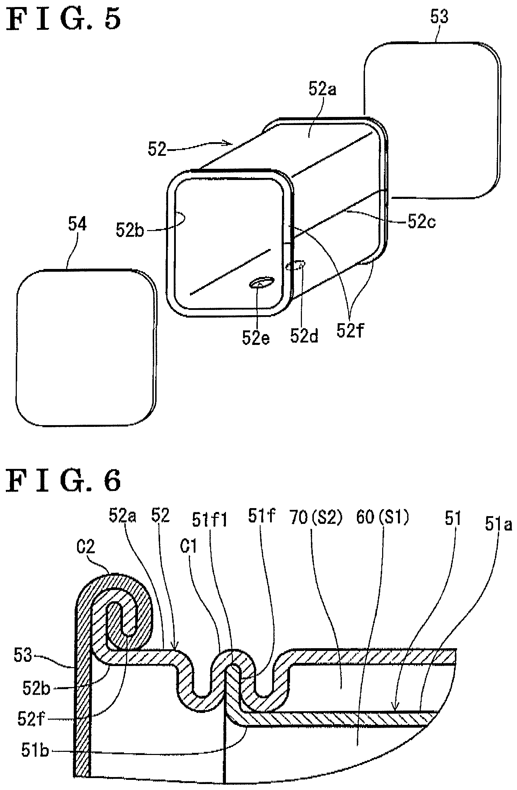

As illustrated in Fig. 3, the second cylindrical member 52 is formed in a cylindrical shape and is arranged to surround the first cylindrical member 51. Specifically, as illustrated mainly in Fig. 5, the second cylindrical member 52 includes the second peripheral side wall 52a formed to have a substantially quadrate-shaped cross section. Further, the second cylindrical member 52 includes first and second opening portions 52b which are respectively provided at both ends of the second cylindrical member 52. The inner surface of the second peripheral side wall 52a faces the outer surface of the first peripheral side wall 51 a of the first cylindrical member 51 while the second space portion S2 is provided between the inner surface of the second peripheral side wall 52a and the outer surface of the first peripheral side wall 51 a (refer to Fig. 3). A length of the second peripheral side wall 52a of the second cylindrical member 52 in the front/rear direction is specified to be longer than a length of the first peripheral side wall 51 a of the first cylindrical member 51 in the front/rear direction. The second cylindrical member 52 is welded at a welded portion 52c. The welded portion 52c is provided over a right-side wall of the second peripheral side wall 52a in the front/rear direction.

The second cylindrical member 52 includes a through bore 52d, a second through hole 52e (which serves as a second through hole), and flange portions 52f. Each of the through bore 52d and the second through hole 52e is formed to penetrate a lower wall of the second peripheral side wall 52a. As illustrated in Fig. 7, a peripheral portion of the first through hole 51 e of the first cylindrical member 51 is in contact with a peripheral edge portion of the second through hole 52e. The flange portion 52f is provided at a peripheral edge of each of the first and second opening portions 52b of the second cylindrical member 52 over an entire circumference of each of the first and second opening portions 52b.

The first cylindrical member 51 and the second cylindrical member 52 are joined to each other in a state where end portions of the first cylindrical member 51 and end portions of the second cylindrical member 52 are joined to each other, respectively, by means of clinching or crimping. That is, the first cylindrical member 51 and the second cylindrical member 52 are joined to each other at portions where the flange portions 51f of the first cylindrical member 51 and the second peripheral side wall 52a of the second cylindrical member 52 are in contact with each other. Specifically, as illustrated in Fig. 6, the second peripheral side wall 52a of the second cylindrical member 52 is bent along an entire periphery thereof so that the inner surface of the second peripheral side wall 52a is in close contact with both side surfaces of the flange portion 51f. Accordingly, a joint portion C1, which is at each of the end portions of the first cylindrical member 51 and second cylindrical member 52, includes airtightness against the gas. Because an end surface 51f1 of each flange portion 51f of the first cylindrical member 51 is in contact with the inner surface of the second peripheral side wall 52a, the second space portion S2 is formed between the outer surface of the first peripheral side wall 51 a of the first cylindrical member 51 and the inner surface of the second peripheral side wall 52a of the second cylindrical member 52.

The first cover member 53 is formed to cover at least one of the first opening portion 51 b of the first cylindrical member 51 (in the present embodiment, the opening portion which is arranged at a front side) and the first opening portion 52b of the second cylindrical member 52. The first cover member 53 is joined to the at least one of the first opening portion 51 b of the first cylindrical member 51 and the first opening portion 52b of the second cylindrical member 52 throughout an entire circumference of the at least one of the first opening portion 51 b of the first cylindrical member 51 and the first opening portion 52b of the second cylindrical member 52. The first cover member 53 is joined to the at least one of the first opening portion 51 b of the first cylindrical member 51 and the first opening portion 52b of the second cylindrical member 52 by clinching, that is, by means of clinch joining or clinch connection. The first cover member 53 is formed in a substantially quadrate plate shape to cover or close the first opening portion 52b, which is at the front side, of the second cylindrical member 52 (refer to Fig. 5). The first cover member 53 is clinched and joined to the first opening portion 52b, which is at the front side, of the second cylindrical member 52 throughout the entire circumference of the first opening portion 52b. Specifically, peripheral edge portions of the respective first cover member 53 and the flange portion 52f of the second cylindrical member 52 are folded or bent at least twice. That is, as illustrated in Fig. 6, the peripheral edge portion of the flange portion 52f of the second cylindrical member 52 is folded twice along an entire circumference of the flange portion 52f so as to be in close contact with both side surfaces of the peripheral edge portion of the first cover member 53. In addition, the peripheral edge portion of the first cover member 53 is folded twice along an entire circumference of the first cover member 53 so as to be in close contact with both side surfaces of the flange portion 52f of the second cylindrical member 52. Accordingly, a joint portion C2, at which the first cover member 53 and the second cylindrical member 52 are joined to each other, includes the airtightness against the gas.

The second cover member 54 is formed to cover at least one of the second opening portion 51 b of the first cylindrical member 51 (in the present embodiment, the opening portion which is arranged at a rear side) and the second opening portion 52b of the second cylindrical member 52. The second cover member 54 is joined to the at least one of the second opening portion 51 b of the first cylindrical member 51 and the second opening portion 52b of the second cylindrical member 52 over an entire circumference of the at least one of the second opening portion 51 b of the first cylindrical member 51 and the second opening portion 52b of the second cylindrical member 52. The second cover member 54 is joined to the at least one of the second opening portion 51 b of the first cylindrical member 51 and the second opening portion 52b of the second cylindrical member 52 by clinching, that is, by means of clinch joining. The second cover member 54 is formed in a substantially quadrate plate shape to cover or close the second opening portion 52b of the second cylindrical member 52 (refer to Fig. 5). The second cover member 54 is clinched and joined to the second opening portion 52b, which is at the rear side, of the second cylindrical member 52 throughout the entire circumference thereof. Specifically, in a similar manner to the joint portion C2 (refer to Fig. 6), peripheral edge portions of the respective second cover member 54 and the flange portion 52f of the second cylindrical member 52 are folded or bent at least twice. Accordingly, a joint portion, at which the second cover member 54 and the second cylindrical member 52 are joined to each other, includes the airtightness against the gas.

The first communication pipe member 55 is formed in a tubular shape or a cylindrical shape and establishes a fluid communication between the first space portion S1 and the outside of the second cylindrical member 52 (the atmosphere). The first space portion S1 corresponds to the portion formed between the outer wall surface of the power generating portion 40 and the inner surface of the first peripheral side wall 51 a of the first cylindrical member 51. As illustrated in Fig. 7, a first opening end portion (i.e., an opening end portion) of the first communication pipe member 55 is arranged to penetrate the first cylindrical member 51 and the second cylindrical member 52, and to be in fluid communication with the first flow passage 60.

The peripheral edge portion of the first through hde 51 e of the first cylindrical member 51 and the peripheral edge portion of the second through hole 52e of the second cylindrical member 52 are arranged to be overlapped with each other. The first communication pipe member 55 is joined to the first cylindrical member 51 and the second cylindrical member 52 in a state where the first opening end portion of the first communication pipe member 55 is clinched to the peripheral edge portion of the first through hole 51 e and to the peripheral edge portion of the second through hole 52e, the peripheral edge portions are overlapped with each other. Specifically, before the first communication pipe member 55 is arranged at each of the first and second through holes 51 e and 52e, the first opening end portion of the first communication pipe member 55 is bent and folded so that a bent portion 55a having an annular configuration is formed at the first opening end portion of the first communication pipe member 55. Next, the first communication pipe member 55 is inserted, from a second opening end portion of the first communication pipe member 55, into each of the first and second through holes 51e and 52e until the bent portion 55a comes in contact with an inner surface (that is, the surface facing towards the power generation portion 40) of the peripheral portion of the first through hole 51 e. Next, the first opening end portion of the first communication pipe member 55 is bent or folded at a lower portion relative to the second through hole 52e so that a bent portion 55b having an annular configuration is formed at the first opening end portion of the first communication pipe member 55. At this time, the bent portion 55a and the inner surface of the peripheral portion of the first through hole 51e are in close contact with each other, an outer surface (that is, the surface facing opposite to the power generation portion 40) of the peripheral portion of the first through hole 51e and an inner surface (that is, the surface facing towards the power generation portion 40) of the peripheral portion of the second through hole 52e are in close contact with each other, and an outer surface (that is, the surface facing opposite to the outside the power generation portion 40) of the peripheral portion of the second through hole 52e and the bent portion 55b are in close contact with each other. Accordingly, a joint portion C3, at which the first opening end portion of the first communication pipe member 55, and the first cylindrical member 51 and the second cylindrical member 52 are joined to one another, includes the airtightness against the gas.

As illustrated in Fig. 8. the second communication pipe member 56 is formed in a tubular shape and establishes a fluid communication between the second space portion S2 and the outside of the second cylindrical member 52 (the atmosphere). The second space portion S2 corresponds to the space portion formed between the outer surface of the first peripheral side wall 51 a of the first cylindrical member 51 and the inner surface of the second peripheral side wall 52a of the second cylindrical member 52 (the second space portion S2). A first opening end portion of the second communication pipe member 56 is arranged to penetrate the second cylindrical member 52, and to be in fluid communication with a second flow passage 70.

The second communication pipe member 56 and the second cylindrical member 52 are joined to each other in a state where the first opening end portion of the second communication pipe member 56 and a peripheral portion of the through bore 52d of the second cylindrical member 52 are clinched to each other. Specifically, before the second communication pipe member 56 is arranged at the through bore 52d, the first opening end portion of the second communication pipe member 56 is bent and folded so that a bent portion 56a having an annular configuration is formed at the first opening end portion of the second communication pipe member 56. Next, the second communication pipe member 56 is inserted, from a second opening end portion of the second communication pipe member 56, into the through bore 52d until the bent portion 56a comes in contact with an inner surface of the peripheral portion of the through bore 52d. Next, the first opening end portion of the second communication pipe member 56 is bent or folded at a lower portion relative to the through bore 52d so that a bent portion 56b having an annular configuration is formed at the first opening end portion of the second communication pipe member 56. At this time, the bent portion 56a and the inner surface of the peripheral portion of the through bore 52d are in close contact with each other, and an outer surface of the peripheral portion of the through bore 52d and the bent portion 56b are in close contact with each other. Accordingly, a joint portion C4, at which the first opening end portion of the second communication pipe member 56, and the second cylindrical member 52 are joined to each other, includes the airtightness against the gas.

The first flow passage 60 is formed between the outer wall surface of the power generation portion 40 and the inner surface of the first peripheral side wall 51 a of the first cylindrical member 51 (the first space portion S1). One of the anode gas, the cathode gas and the exhaust combustion gas flows through the first flow passage 60. In the present embodiment, the exhaust combustion gas flows through the first flow passage 60. That is, the first flow passage 60 corresponds to an exhaust combustion gas flow passage. As shown with the solid arrows in Fig. 3, the exhaust combustion gas is discharged from the combusting portion 44 to the outside of the second cylindrical member 52 (that is, to the atmosphere) via the first flow passage 60 and the first communication pipe member 55.

The second flow passage 70 is formed between the outer surface of the first peripheral side wall 51 a of the first cylindrical member 51 and the inner surface of the second peripheral side wall 52a of the second cylindrical member 52 (the second space portion S2). Another of the anode gas, the cathode gas and the exhaust combustion gas flows through the second flow passage 70. In the present embodiment, the cathode gas flows through the second flow passage 70. That is, the second flow passage 70 corresponds to the cathode gas flow passage. The other end of the cathode air supply pipe 11c is connected to the second opening end portion of the second communication pipe member 56 as illustrated in Fig. 2. Accordingly, the cathode air is supplied by the cathode air blower 11c1 to the second communication pipe member 56 via the cathode air supply pipe 11c. Then, as shown with the dotted arrows in Fig. 3, the cathode gas is supplied to the lower end of the air flow passage of the fuel cell 43a via the second flow passage 70 and the gas introduction member 57, which are in fluid communication with the second communication pipe member 56.

In addition, as illustrated in Fig. 3, the exhaust combustion gas flowing through the first flow passage 60 and the cathode gas flowing through the second flow passage 70 flow in opposite directions to each other (a countercurrent type). Accordingly, heat exchange is performed efficiently between the cathode gas and the exhaust combustion gas. That is, the cathode gas is preheated by the exhaust combustion gas efficiently.

According to the present embodiment, the fuel cell module 11 includes the power generation portion 40 including the fuel cell 43a generating the electric power from the anode gas and the cathode gas, and the combusting portion 44 combusting the anode off-gas and generating the exhaust combustion gas, the first cylindrical member 51 formed in the cylindrical shape and arranged to surround the power generation portion 40, the first cylindrical member 51 including the first peripheral side wall 51 a including the inner surface facing the outer wall surface of the power generation portion 40 while the first space portion S1 is provided between the inner surface of the first peripheral side wall 51 a and the outer wall surface of the power generation portion 40, the first cylindrical member 51 including the first and second opening portions 51 b provided at respective ends of the first cylindrical member 51, the second cylindrical member 52 formed in the cylindrical shape and arranged to surround the first cylindrical member 51, the second cylindrical member 52 including the second peripheral side wall 52a including the inner surface facing the outer surface of the first peripheral side wall 51 a of the first cylindrical member 51 while the second space portion S2 is provided between the inner surface of the second peripheral side wall 52a and the outer surface of the first peripheral side wall 51 a, the second cylindrical member 52 including the first and second opening portions 52b provided at respective ends of the second cylindrical member 52, the first cover member 53 formed to cover at least one of the first opening portion 51 b of the first cylindrical member 51 and the first opening portion 52b of the second cylindrical member 52, the first cover member 53 being joined to the at least one of the first opening portion 51 b of the first cylindrical member 51 and the first opening portion 52b of the second cylindrical member 52 throughout the entire circumference of the at least one of the first opening portion 51 b of the first cylindrical member 51 and the first opening portion 52b of the second cylindrical member 52, the second cover member 54 formed to cover at least one of the second opening portion 51 b of the first cylindrical member 51 and the second opening portion 52b of the second cylindrical member 52, the second cover member 54 being joined to the at least one of the second opening portion 51 b of the first cylindrical member 51 and the second opening portion 52b of the second cylindrical member 52 throughout the entire circumference of the at least one of the second opening portion 51 b of the first cylindrical member 51 and the second opening portion 52b of the second cylindrical member 52, the first flow passage 60 provided between the outer wall surface of the power generation portion 40 and the inner surface of the first peripheral side wall 51 a of the first cylindrical member 51, the first flow passage 60 allowing one of the anode gas, the cathode gas and the exhaust combustion gas to flow through the first flow passage 60, and the second flow passage 70 provided between the outer surface of the first peripheral side wall 51 a of the first cylindrical member 51 and the inner surface of the second peripheral side wall 52a of the second cylinder member 52, the second flow passage 70 allowing another of the anode gas, the cathode gas and the exhaust combustion gas to flow through the second flow passage 70. According to the above-described configuration, the exterior portion 50 of the fuel cell module 11 is constituted by the first cylindrical member 51 and the second cylindrical member 52, each of which is formed in the cylindrical shape. Accordingly, compared to the known configuration where an exterior portion or an outer casing is constituted by a U-shaped member and a cover member closing an opening portion of the U-shaped member, the number of the parts and components constituting the fuel cell module 11 is reduced. Consequently, costs of the fuel cell module 11 may be reduced. In addition, in the known configuration, joining of the U-shaped member and the cover member to each other includes plural joint portions. Compared thereto, according to the above-described configuration of the present embodiment, the first cover member 53 is joined to the at least one of the first opening portion 51 b of the first cylindrical member 51 and the first opening portion 52b of the second cylindrical member 52 over the entire circumference of the opening portion and therefore the number of the joint portions between the first cover member 53, and the at least one of the first cylindrical member 51 and the second cylindrical member 52 is reduced. Further, the second cover member 54 is jointed to the at least one of the second opening portion 51 b of the first cylindrical member 51 and the second opening portion 52b of the second cylindrical member 52 over the entire circumference of the opening portion, and therefore the number of the joint portions between the second cover member 54, and the at least one of the first cylindrical member 51 and the second cylindrical member 52 is reduced. In addition, the first cover member 53 and the second cover member 54 are joined either to the first and second opening portions 51 b of the first cylindrical member 51 or to the first and second opening portions 52b of the first cylindrical member 52 along the entire circumference of the opening, and accordingly the members can be continuously joined to one another. Consequently, easiness in manufacturing the fuel cell module 11 is enhanced. As a result, the costs of the fuel cell module 11 are reduced while the easiness in manufacturing the fuel cell module 11 is enhanced.

In addition, the first flow passage 60 corresponds to the exhaust combustion gas flow passage through which the exhaust combustion gas fbws, and the second flow passage 70 corresponds to a cathode gas flow passage through which the cathode gas flows. According to the above-described configuration, at the fuel cell module 11, the power generation portion 40, the exhaust combustion gas flow passage (the first flow passage) 60 and the cathode gas flow passage (the second flow passage) 70 are arranged in the mentioned order from the inner side to the outer side. Accordingly, the exhaust combustion gas that is relatively high in temperature flows at the inner side of the fuel cell module 11 relative to the flow of the cathode gas. Consequently, compared to a case where the exhaust combustion gas flow passage is arranged at the outer side relative to the cathode gas flow passage, a heat discharge from the exhaust combustion gas to the outside is restricted. As a result, the heat exchange between the exhaust combustion gas and the cathode gas is performed efficiently, and thus the exhaust combustion gas can preheat the cathode gas efficiently.

In addition, the first flow passage 60 corresponds to the first space portion S1 formed between the plural protruding portions 51 g provided at the first peripheral side wall 51 a and the outer wall surface. Accordingly, the first space portion S1 is formed between the outer wall surface 45a and the inner surface of the first peripheral side wall 51 a.

In addition, the first cylindrical member 51 and the second cylindrical member 52 are joined to each other in a state where the end portions of the first cylindrical member 51 and the end portions of the second cylindrical member 52 are clinched to each other, respectively, the joining of the first cover member 53, and the at least one of the first opening portion 51 b of the first cylindrical member 51 and the first opening portion 52b of the second cylindrical member 52 corresponds to the clinch joining, and the joining of the second cover member 54, and the at least one of the second opening portion 51 b of the first cylindrical member 51 and the second opening portion 52b of the second cylindrical member 52 corresponds to the clinch joining. According to the above-described configuration, the first cover member 53 and the second cover member 54 are joined either to the first and second opening portions 51 b of the first cylindrical member 51 or to the first and second opening portions 52b of the second cylindrical member 52 over the entire circumference, and the members are joined to one another by clinching. Accordingly, the members are joined to one another easily while the airtightness of the joint portions is reliably ensured. As a result, the costs of the fuel cell module 11 are more reduced while the easiness in manufacturing the fuel cell module 11 is more enhanced.

The fuel cell module 11 includes the first communication pipe member 55 formed in the cylindrical shape and connecting the first flow passage 60 and the outside of the second cylindrical member 52 to each other in such a manner that the first flow passage 60 and the outside of the second cylindrical member 52 are in the fluid communication with each other, the first peripheral side wall 51 a of the first cylindrical member 51 including the first through hole 51e and the second peripheral side wall 52a of the second cylindrical member 52 including the second through hole 52e, the peripheral edge portion of the first through hole 51e of the first cylindrical member 51 and the peripheral edge portion of the second through hole 52e of the second cylindrical member 52 being overlapped with each other, and the first communication pipe member 55 being joined to the first cylindrical member 51 and to the second cylindrical member 52 in a state where the first opening end portion of the first communication pipe member 55, and the peripheral edge portion of the first through hole 51 e and the peripheral edge portion of the second through hole 52e are clinched to one another. According to the above-described configuration, when joining the first communication pipe member 55, and the first and second cylindrical members 51 and 52 to one another, the first communication pipe member 55, and the first and second cylindrical members 51 and 52 are joined at a time. Accordingly, the members are joined to one another easily in a short period of time. As a result, the easiness in manufacturing the fuel cell module 11 is further enhanced while the costs of the fuel cell module 11 are reduced.

In addition, the power generation portion 40 includes the heat insulating member 45 insulating the heat between the fuel cell 43a and the outside of the fuel cell 43a, and at least a part of the outer wall surface of the power generation portion 40 is formed by the outer wall surface 45a of the heat insulating member 45. According to the above-described configuration, the heat insulating member 45 conserves the heat of the fuel cell 43a, and the outer wall surface 45a of the heat insulating member 45 serves also as an inner wall surface of the first flow passage 60. As a result, the costs of the fuel cell module 11 are further reduced because the number of the parts and components of the fuel cell module 11 is reduced.

In addition, because each of the first cylindrical member 51 and the second cylindrical member 52 is formed in the cylindrical configuration, rigidity of the exterior portion 50 is relatively higher than a case where the exterior portion 50 is configured to include the U-shaped member as in the known configuration. Accordingly, wall thickness of the first peripheral side wall 51 a and the second peripheral side wall 52a of the first cylindrical member 51 and the second cylindrical member 52 can be relatively reduced, and thus sizes of the first cylindrical member 51 and the second cylindrical member 52 are relatively reduced. Consequently size of the exterior portion 50 is relatively reduced. As a result, the size reduction and the cost reduction of the fuel cell module 11 are achieved.

In addition, in the case where the first cylindrical member 51 and the second cylindrical member 52 are formed to include the relatively small size as described above, the second flow passage 70 is arranged to be closer to the fuel cell 43a. Thus, the cathode gas flowing through the second flow passage 70 is efficiently preheated by the heat caused by the operation of the fuel cell 43a, which operates at the relatively high temperature. In addition, because the first cylindrical member 51 and the second cylindrical member 52 are formed to include the relatively small size, surface area of the first cylindrical member 51 and the second cylindrical member 52 is relatively small. Thus, the heat of the exhaust combustion gas and the cathode gas is prevented from being discharged from the fuel cell module 11 to the outside. Accordingly, the heat exchange is performed efficiently between the exhaust combustion gas and the cathode gas. As a result, the cathode gas is preheated by the exhaust combustion gas efficiently.

In addition, the joint portions, at which the members are joined to each other by clinching, are joined only by means of clinching, that is, without use of, for example, sealing material. Accordingly, compared to a case where sealing material of which heat resistance is relatively low is used at the joint portions, the airtightness is reliably assured at each of the joint portions even in a case where the fuel cell 43a operates at the relatively high temperature.

The aforementioned embodiment is an example of the fuel cell module disclosed here and the fuel cell module disclosed here is not limited to the aforementioned embodiment, and a modification may be applied.

In the aforementioned embodiment, each of the first cover member 53 and the second cover member 54 is joined only to the second cylindrical member 52. Alternatively, each of the first cover member 53 and the second cover member 54 may be joined only to the first cylindrical member 51. In this case, lengths of the first cylindrical member 51 and the second cylindrical member 52 may be specified so that the length of the first cylindrical member 51 in the front/rear direction is longer than the length of the second cylindrical member 52 in the front/rear direction.

In addition, each of the first cover member 53 and the second cover member 54 may be joined to both the first cylindrical member 51 and the second cylindrical member 52. In this case, the lengths of the first cylindrical member 51 and the second cylindrical member 52 may be specified so that a peripheral edge portion of the flange portion 51f of the first cylindrical member 51 and the peripheral edge portion of the flange portion 52f of the second cylindrical member 52 are in contact with each other throughout the entire circumference thereof. Each of the first cover member 53 and the second cover member 54 may be joined to both the first cylindrical member 51 and the second cylindrical member 52. At this time, the first cover member 53 and the second cover member 54 are in contact with the flange portions 51f of the first cylindrical member 51 and with the flange portions 52f of the second cylindrical member 52 throughout the entire circumference thereof so that the peripheral edge portions of the first cover member 53 and the second cover member 54 are in close contact with the flange portions 51f and with the flange portions 52f.

In addition, in the aforementioned embodiment, the protruding portions 51 g are provided at the first peripheral side wall 51 a of the first cylindrical member 51. Alternatively, however, plural protruding portions may be provided at the outer wall surface 45a of the heat insulating member 45 in a manner that each of the protruding portions protrudes toward the inner surface of the first peripheral side wall 51 a.

In addition, in the aforementioned embodiment, the first flow passage 60 corresponds to the exhaust combustion gas flow passage and the second flow passage 70 corresponds to the cathode gas flow passage. Alternatively, however, the first flow passage 60 may correspond to the cathode gas flow passage and the second flow passage 70 may correspond to the exhaust combustion gas flow passage. Further, the first flow passage 60 may correspond to an anode gas flow passage through which the anode gas flows and the second flow passage 70 may correspond to the exhaust combustion gas flow passage. Further, the first flow passage 60 may correspond to the exhaust combustion gas flow passage and the second flow passage 70 may correspond the anode gas flow passage. Further, the first flow passage 60 may correspond to the anode gas passage and the second flow passage 70 may correspond to the cathode bas flow passage. Further, the first flow passage 60 may correspond to the cathode gas flow passage and the second flow passage 70 may correspond to the anode gas flow passage.

## Claims

1. A fuel cell module (11), comprising:
a power generation portion (40) including a fuel cell (43a) generating electric power from an anode gas and a cathode gas, and a combusting portion (44) combusting an anode off-gas and generating an exhaust combustion gas;
a first cylindrical member (51) arranged to surround the power generation portion (40), the first cylindrical member (51) including a first peripheral side wall (51a) including an inner surface facing an outer wall surface of the power generation portion (40) while a first space portion (S1) is provided between the inner surface of the first peripheral side wall (51a) and the outer wall surface of the power generation portion (40), the first cylindrical member (51) including first and second opening portions (51b) provided at respective ends of the first cylindrical member (51);
a second cylindrical member (52) arranged to surround the first cylindrical member (51), the second cylindrical member (52) including a second peripheral side wall (52a) including an inner surface facing an outer surface of the first peripheral side wall (51a) of the first cylindrical member (51) while a second space portion (S2) is provided between the inner surface of the second peripheral side wall (52a) and the outer surface of the first peripheral side wall (51a), the second cylindrical member (52) including first and second opening portions (52b) provided at respective ends of the second cylindrical member (52);
a first cover member (53) formed to cover at least one of the first opening portion (51b) of the first cylindrical member (51) and the first opening portion (52b) of the second cylindrical member (52), the first cover member (53) being joined to the at least one of the first opening portion (51b) of the first cylindrical member (51) and the first opening portion (52b) of the second cylindrical member (52) throughout an entire circumference of the at least one of the first opening portion (51b) of the first cylindrical member (51) and the first opening portion (52b) of the second cylindrical member (52);
a second cover member (54) formed to cover at least one of the second opening portion (51b) of the first cylindrical member (51) and the second opening portion (52b) of the second cylindrical member (52), the second cover member (54) being joined to the at least one of the second opening portion (51b) of the first cylindrical member (51) and the second opening portion (52b) of the second cylindrical member (52) throughout an entire circumference of the at least one of the second opening portion (51b) of the first cylindrical member (51) and the second opening portion (52b) of the second cylindrical member (52);
a first flow passage (60) provided between the outer wall surface of the power generation portion (40) and the inner surface of the first peripheral side wall (51a) of the first cylindrical member (51), the first flow passage (60) allowing one of the anode gas, the cathode gas and the exhaust combustion gas to flow through the first flow passage (60); and
a second flow passage (70) provided between the outer surface of the first peripheral side wall (51a) of the first cylindrical member (51) and the inner surface of the second peripheral side wall (52a) of the second cylinder member (52), the second flow passage (70) allowing another of the anode gas, the cathode gas and the exhaust combustion gas to flow through the second flow passage (70)
**characterized in that**
the first member (51) is formed in a cylindrical shape and is welded at one single welded portion (51c) provided over the first peripheral side wall (51a) in a direction of the respective ends of the first member (51), and
the second member (52) is formed in a cylindrical shape and is welded at one single welded portion (52c) provided over the second peripheral side wall (52a) in a direction of the respective ends of the second member (52).

2. The fuel cell module (11) according to claim 1, wherein
the first flow passage (60) corresponds to an exhaust combustion gas flow passage through which the exhaust combustion gas flows, and
the second flow passage (70) corresponds to a cathode gas flow passage through which the cathode gas flows.

3. The fuel cell module (11) according to either claim 1 or 2, wherein the first flow passage (60) corresponds to the first space portion (S1) formed between a plurality of protruding portions (51g) provided at the first peripheral side wall (51a) and the outer wall surface.

4. The fuel cell module (11) according to any one of claims 1 to 3, wherein
the first cylindrical member (51) and the second cylindrical member (52) are joined to each other in a state where end portions of the first cylindrical member (51) and end portions of the second cylindrical member (52) are clinched to each other, respectively,
a joining of the first cover member (53), and the at least one of the first opening portion (51b) of the first cylindrical member (51) and the first opening portion (52b) of the second cylindrical member (52) corresponds to clinch joining, and
a joining of the second cover member (54), and the at least one of the second opening portion (51b) of the first cylindrical member (51) and the second opening portion (52b) of the second cylindrical member (52) corresponds to clinch joining.

5. The fuel cell module (11) according to any one of claims 1 to 4, further comprising:
a communication pipe member (55) formed in a cylindrical shape and connecting the first flow passage (60) and an outside of the second cylindrical member (52) to each other in such a manner that the first flow passage (60) and the outside of the second cylindrical member (52) are in fluid communication with each other;
the first peripheral side wall (51a) of the first cylindrical member (51) including a first through hole (51e) and the second peripheral side wall (52a) of the second cylindrical member (52) including a second through hole (52e); and
a peripheral edge portion of the first through hole (51e) of the first cylindrical member (51) and a peripheral edge portion of the second through hole (52e) of the second cylindrical member (52) being overlapped with each other, the communication pipe member (55) being joined to the first cylindrical member (51) and to the second cylindrical member (52) in a state where an opening end portion of the communication pipe member (55) and the overlapped peripheral edge portions are clinched to each other.

6. The fuel cell module (11) according to any one of claims 1 to 5, wherein
the power generation portion (40) includes a heat insulating member (45) insulating heat between the fuel cell (43a) and an outside of the fuel cell (43a), and
at least a part of the outer wall surface of the power generation portion (40) is formed by an outer wall surface (45a) of the heat insulating member (45).

7. A fuel cell system comprising:
the fuel cell module (11) according to any one of claims 1 to 6.

## Patentansprüche

1. Brennstoffzellenmodul (11), mit:
einem Stromerzeugungsabschnitt (40), der eine Brennstoffzelle (43a), die aus einem Anodengas und eine Kathodengas elektrischen Strom erzeugt, und einen Verbrennungsabschnitt (44) aufweist, der ein Anodenabgas verbrennt und ein Abgasverbrennungsgas erzeugt;
einem ersten zylinderförmigen Bauteil (51), das so angeordnet ist, dass es den Stromerzeugungsabschnitt (40) umgibt, wobei das erste zylinderförmige Bauteil (51) eine erste Umfangsseitenwand (51a) mit einer Innenfläche aufweist, die einer Außenwandfläche des Stromerzeugungsabschnitts (40) zugewandt ist, während zwischen der Innenfläche der ersten Umfangsseitenwand (51a) und der Außenwandfläche des Stromerzeugungsabschnitts (40) ein erster Zwischenraumabschnitt (S1) vorgesehen ist, und das erste zylinderförmige Bauteil (51) erste und zweite Öffnungsabschnitte (51b) aufweist, die an jeweiligen Enden des ersten zylinderförmigen Bauteils (51) vorgesehen sind;
einem zweiten zylinderförmigen Bauteil (52), das so angeordnet ist, dass es das erste zylinderförmige Bauteil (51) umgibt, wobei das zweite zylinderförmige Bauteil (52) eine zweite Umfangsseitenwand (52a) mit einer Innenfläche aufweist, die einer Außenfläche der ersten Umfangsseitenwand (51a) des ersten zylinderförmigen Bauteils (51) zugewandt ist, während zwischen der Innenfläche der zweiten Umfangsseitenwand (52a) und der Außenfläche der ersten Umfangsseitenwand (51a) ein zweiter Zwischenraumabschnitt (S2) vorgesehen ist, und das zweite zylinderförmige Bauteil (52) erste und zweite Öffnungsabschnitte (52b) aufweist, die an jeweiligen Enden des zweiten zylinderförmigen Bauteils (52) vorgesehen sind;
einem ersten Abdeckungsbauteil (53), das so ausgebildet ist, dass es zumindest einen von dem ersten Öffnungsabschnitt (51b) des ersten zylinderförmigen Bauteils (51) und dem ersten Öffnungsabschnitt (52b) des zweiten zylinderförmigen Abschnitts (52) bedeckt, wobei das erste Abdeckungsbauteil (53) mit mindestens einem von dem ersten Öffnungsabschnitt (51b) des ersten zylinderförmigen Bauteils (51) und dem ersten Öffnungsabschnitt (52b) des zweiten zylinderförmigen Bauteils (52) über einen gesamten Umfang des mindestens einen von dem ersten Öffnungsabschnitt (51b) des ersten zylinderförmigen Bauteils (51) und dem ersten Öffnungsabschnitt (52b) des zweiten zylinderförmigen Bauteils (52) hinweg verbunden ist;
einem zweiten Abdeckungsbauteil (54), das so ausgebildet ist, dass es zumindest einen von dem zweiten Öffnungsabschnitt (51b) des ersten zylinderförmigen Bauteils (51) und dem zweiten Öffnungsabschnitt (52b) des zweiten zylinderförmigen Bauteils (52) bedeckt, wobei das zweite Abdeckungsbauteil (54) mit zumindest einem von dem zweiten Öffnungsabschnitt (51b) des ersten zylinderförmigen Bauteils (51) und dem zweiten Öffnungsabschnitt (52b) des zweiten zylinderförmigen Bauteils (52) über einen gesamten Umfang des zumindest einen von dem zweiten Öffnungsabschnitt (51b) des ersten zylinderförmigen Bauteils (51) und dem zweiten Öffnungsabschnitt (52b) des zweiten zylinderförmigen Bauteils (52) hinweg verbunden ist;
einem ersten Strömungsdurchgang (60), der zwischen der Außenwandfläche des Stromerzeugungsabschnitts (40) und der Innenfläche der ersten Umfangsseitenwand (51a) des ersten zylinderförmigen Bauteils (51) vorgesehen ist, wobei der erste Strömungsdurchgang (60) eines von dem Anodengas, dem Kathodengas und dem Abgasverbrennungsgas durch den ersten Strömungsdurchgang (60) strömen lässt; und
einem zweiten Strömungsdurchgang (70), das zwischen der Außenfläche der ersten Umfangsseitenwand (51a) des ersten zylinderförmigen Bauteils (51) und der Innenfläche der zweiten Umfangsseitenwand (52a) des zweiten Zylinderbauteils (52) vorgesehen ist, wobei der zweite Strömungsdurchgang (70) ein anderes von dem Anodengas, dem Kathodengas und dem Abgasverbrennungsgas durch den zweiten Strömungsdurchgang (70) strömen lässt,
**dadurch gekennzeichnet, dass**
das erste Bauteil (51) in einer Zylinderform ausgebildet ist und an einem einzigen Schweißabschnitt (51c) verschweißt ist, der über der ersten Umfangsseitenwand (51a) in Richtung der jeweiligen Enden des ersten Bauteils (51) vorgesehen ist, und
das zweite Bauteil (52) in einer Zylinderform ausgebildet ist und an einem einzigen Schweißabschnitt (52c) verschweißt ist, der über der zweiten Umfangsseitenwand (52a) in Richtung der jeweiligen Enden des zweiten Bauteils (52) vorgesehen ist.

2. Brennstoffzellenmodul (11) nach Anspruch 1, wobei
der erste Strömungsdurchgang (60) einem Abgasverbrennungsgas-Strömungsdurchgang entspricht, durch den das Abgasverbrennungsgas strömt und
der zweite Strömungsdurchgang (70) einem Kathodengas-Strömungsdurchgang entspricht, durch den das Kathodengas strömt.

3. Brennstoffzellenmodul (11) nach entweder Anspruch 1 oder 2, wobei
der erste Strömungsdurchgang (60) dem ersten Zwischenraumabschnitt (S1) entspricht, der zwischen einer Vielzahl von Vorsprungsabschnitten (51g), die an der ersten Umfangsseitenwand (51a) vorgesehen sind, und der Außenwandfläche ausgebildet ist.

4. Brennstoffzellenmodul (11) nach einem der Ansprüche 1 bis 3, wobei
das erste zylinderförmige Bauteil (51) und das zweite zylinderförmige Bauteil (52) miteinander in einem Zustand verbunden sind, in dem Endabschnitte des ersten zylinderförmigen Bauteils (51) und Endabschnitte des zweiten zylinderförmigen Bauteils (52) jeweils miteinander geclincht sind,
eine Verbindung des ersten Abdeckungsbauteils (53) und des zumindest einen von dem ersten Öffnungsabschnitt (51b) des ersten zylinderförmigen Bauteils (51) und dem ersten Öffnungsabschnitt (52b) des zweiten zylinderförmigen Bauteils (52) einer Clinchverbindung entspricht und
eine Verbindung des zweiten Abdeckungsbauteils (54) und des zumindest einen von dem zweiten Öffnungsabschnitt (51b) des ersten zylinderförmigen Bauteils (51) und dem zweiten Öffnungsabschnitt (52b) des zweiten zylinderförmigen Bauteils (52) einer Clinchverbindung entspricht.

5. Brennstoffzellenmodul (11) nach einem der Ansprüche 1 bis 4, mit zudem:
einem Verbindungsrohrbauteil (55), das in einer zylinderförmigen Form ausgebildet ist und den ersten Strömungsdurchgang (60) und eine Außenseite des zweiten zylinderförmigen Bauteils (52) auf eine solche Weise miteinander verbindet, dass der erste Strömungsdurchgang (60) und die Außenseite des zweiten zylinderförmigen Bauteils (52) miteinander in Fluidverbindung stehen;
wobei die erste Umfangsseitenwand (51a) des ersten zylinderförmigen Bauteils (51) ein erstes Durchgangsloch (51e) aufweist und die zweite Umfangsseitenwand (52a) des zweiten zylinderförmigen Bauteils (52) ein zweites Durchgangsloch (52e) aufweist; und
wobei ein Umfangskantenabschnitt des ersten Durchgangslochs (51e) des ersten zylinderförmigen Bauteils (51) und ein Umfangskantenabschnitt des zweiten Durchgangslochs (52e) des zweiten zylinderförmigen Bauteils (52) einander überlappen und das Verbindungsrohrbauteil (55) mit dem ersten zylinderförmigen Bauteil (51) und dem zweiten zylinderförmigen Bauteil (52) in einem Zustand verbunden ist, in dem ein Öffnungsendabschnitt des Verbindungsrohrbauteils (55) und die überlappenden Umfangskantenabschnitte miteinander geclincht sind.

6. Brennstoffzellenmodul (11) nach einem der Ansprüche 1 bis 5, wobei
der Stromerzeugungsabschnitt (40) ein wärmeisolierendes Bauteil (45) aufweist, das Wärme zwischen der Brennstoffzelle (43a) und einer Außenseite der Brennstoffzelle (43a) isoliert, und
zumindest ein Teil der Außenwandfläche des Stromerzeugungsabschnitts (40) durch eine Außenwandfläche (45a) des wärmeisolierenden Bauteils (45) ausgebildet wird.

7. Brennstoffzellensystem mit:
dem Brennstoffzellenmodul (11) gemäß einem der Ansprüche 1 bis 6.

## Revendications

1. Module de pile à combustible (11) comprenant :
une partie de génération d'énergie (40) comprenant une pile à combustible (43a) générant de l'énergie électrique à partir d'un gaz anodique et d'un gaz cathodique, et une partie de combustion (44) brûlant un gaz de dégagement d'anode et générant un gaz de combustion d'échappement ;
un premier élément cylindrique (51) agencé pour entourer la partie de génération d'énergie (40), le premier élément cylindrique (51) comprenant une première paroi latérale périphérique (51a) comprenant une surface interne faisant face à une surface de paroi externe de la partie de génération d'énergie (40) alors qu'une première partie d'espace (S1) est prévue entre la surface interne de la première paroi latérale périphérique (51a) et la surface de paroi externe de la partie de génération d'énergie (40), le premier élément cylindrique (51) comprenant des première et seconde parties d'ouverture (51b) prévues au niveau des extrémités respectives du premier élément cylindrique (51) ;
un second élément cylindrique (52) agencé pour entourer le premier élément cylindrique (51), le second élément cylindrique (52) comprenant une seconde paroi latérale périphérique (52a) comprenant une surface interne faisant face à une surface externe de la première paroi latérale périphérique (51a) du premier élément cylindrique (51) alors qu'une seconde partie d'espace (S2) est prévue entre la surface interne de la seconde paroi latérale périphérique (52a) et la surface externe de la première paroi latérale périphérique (51a), le second élément cylindrique (52) comprenant des première et seconde parties d'ouverture (52b) prévues au niveau des extrémités respectives du second élément cylindrique (52) ;
un premier élément de couvercle (53) formé pour recouvrir l'une parmi la première partie d'ouverture (51b) du premier élément cylindrique (51) et la première partie d'ouverture (52b) du second élément cylindrique (52), le premier élément de couvercle (53) étant assemblé à la au moins une parmi la première partie d'ouverture (51b) du premier élément cylindrique (51) et la première partie d'ouverture (52b) du second élément cylindrique (52) sur toute la circonférence de la au moins une parmi la première partie d'ouverture (51b) du premier élément cylindrique (51) et la première partie d'ouverture (52b) du second élément cylindrique (52) ;
un second élément de couvercle (54) formé pour couvrir au moins l'une parmi la seconde partie d'ouverture (51b) du premier élément cylindrique (51) et la seconde partie d'ouverture (52b) du second élément cylindrique (52), le second élément de couvercle (54) étant assemblé à la au moins une parmi la seconde partie d'ouverture (51b) du premier élément cylindrique (51) et la seconde partie d'ouverture (52b) du second élément cylindrique (52) sur toute la circonférence de la au moins une parmi la seconde partie d'ouverture (51b) du premier élément cylindrique (51) et la seconde partie d'ouverture (52b) du second élément cylindrique (52) ;
un premier passage d'écoulement (60) prévu entre la surface de paroi externe de la partie de génération d'énergie (40) et la surface interne de la première paroi latérale périphérique (51a) du premier élément cylindrique (51), le premier passage d'écoulement (60) permettant à l'un parmi le gaz anodique, le gaz cathodique et le gaz de combustion d'échappement de s'écouler à travers le premier passage d'écoulement (60) ; et
un second passage d'écoulement (70) prévu entre la surface externe de la première paroi latérale périphérique (51a) du premier élément cylindrique (51) et la surface interne de la seconde paroi latérale périphérique (52a) du second élément cylindrique (52), le second passage d'écoulement (70) permettant à un autre parmi le gaz anodique, le gaz cathodique et le gaz de combustion d'échappement de s'écouler à travers le second passage d'écoulement (70),
**caractérisé en ce que** :
le premier élément (51) est formé selon une forme cylindrique et est soudé au niveau d'une seule partie soudée (51c) prévue sur la première paroi latérale périphérique (51a) dans une direction des extrémités respectives du premier élément (51), et
le second élément (52) est formé selon une forme cylindrique et est soudé au niveau d'une seule partie soudée (52c) prévue sur la seconde paroi latérale périphérique (52a) dans une direction des extrémités respectives du second élément (52).

2. Module de pile à combustible (11) selon la revendication 1, dans lequel :
le premier passage d'écoulement (60) correspond à un passage d'écoulement de gaz de combustion d'échappement à travers lequel s'écoule le gaz de combustion d'échappement, et
le second passage d'écoulement (70) correspond à un passage d'écoulement de gaz cathodique à travers lequel s'écoule le gaz cathodique.

3. Module de pile à combustible (11) selon la revendication 1 ou 2, dans lequel le premier passage d'écoulement (60) correspond à la première partie d'espace (S1) formée entre une pluralité de parties en saillie (51g) prévues au niveau de la première paroi latérale périphérique (51a) et de la surface de paroi externe.

4. Module de pile à combustible (11) selon l'une quelconque des revendications 1 à 3, dans lequel :
le premier élément cylindrique (51) et le second élément cylindrique (52) sont assemblés dans un état dans lequel des parties d'extrémité du premier élément cylindrique (51) et des parties d'extrémité du second élément cylindrique (52) sont rivées entre elles, respectivement,
un assemblage du premier élément de couvercle (53) et de la au moins une parmi la première partie d'ouverture (51b) du premier élément cylindrique (51) et de la première partie d'ouverture (52b) du second élément cylindrique (52) correspond à l'assemblage par rivure, et
un assemblage du second élément de couvercle (54) et de la au moins une seconde partie d'ouverture (51b) du premier élément cylindrique (51) et de la seconde partie d'ouverture (52b) du second élément cylindrique (52) correspond à l'assemblage par rivure.

5. Module de pile à combustible (11) selon l'une quelconque des revendications 1 à 4, comprenant en outre :
un élément de tuyau de communication (55) formé selon une forme cylindrique et raccordant le premier passage d'écoulement (60) et un extérieur du second élément cylindrique (52) entre eux de sorte que le premier passage d'écoulement (60) et l'extérieur du second élément cylindrique (52) sont en communication de fluide entre eux ;
la première paroi latérale périphérique (51a) du premier élément cylindrique (51) comprenant un premier trou débouchant (51e) et la seconde paroi latérale périphérique (52a) du second élément cylindrique (52) comprenant un second trou débouchant (52e) ; et
une partie de bord périphérique du premier trou débouchant (51e) du premier élément cylindrique (51) et une partie de bord périphérique du second trou débouchant (52e) du second élément cylindrique (52) se chevauchant l'une l'autre, l'élément de tuyau de communication (55) étant assemblé au premier élément cylindrique (51) et au second élément cylindrique (52) dans un état dans lequel une partie d'extrémité d'ouverture de l'élément de tuyau de communication (55) et les parties de bord périphérique chevauchées sont rivées entre elles.

6. Module de pile à combustible (11) selon l'une quelconque des revendications 1 à 5, dans lequel :
la partie de génération d'énergie (40) comprend un élément thermiquement isolant (45) isolant thermiquement entre la pile à combustible (43a) et un extérieur de la pile à combustible (43a), et
au moins une partie de la surface de paroi externe de la partie de génération d'énergie (40) est formée par une surface de paroi externe (45a) de l'élément thermiquement isolant (45).

7. Système de pile à combustible comprenant :
un module de pile à combustible (11) selon l'une quelconque des revendications 1 à 6.
